# EUROPEAN PATENT SPECIFICATION

(11) **EP 1 384 927 B1**
(45) Date of publication and mention of the grant of the patent: **21.03.2007**
(21) Application number: 03013902.6
(22) Date of filing: 20.06.2003
(51) Int. Cl.: F16K 39/04, F16K 11/078

(54) **Cartridge construction for a faucet switching device with at least two outlets**
Umschaltbatteriekartusche mit mindstens zwei Auslässen
Cartouche de robinet avec au moins deux sorties

(30) Priority: 26.07.2002 IT MI20021680
(43) Date of publication of application: 28.01.2004
(73) Proprietor: CRS S.P.A., 28010 Fontaneto D'Agogna, NO (IT)
(72) Inventor: Gyozo, Janos Baky, 28060 Cureggio (Novara) (IT)
(74) Representative: Cicogna, Franco

(56) References cited:
- WO-A-01/66986
- GB-A- 2 108 634
- GB-A- 2 154 705

## Description

### BACKGROUND OF THE INVENTION

The present invention relates to a cartridge construction for a faucet switching device with at least two outlets.

As is known, faucet switching devices are used in the faucet or cock field for selectively water supplying several hydraulic devices, typically comprising different delivery elements.

The document WO-A-0166986 discloses a cartridge construction substantially according to the preamble of claim 1.

### SUMMARY OF THE INVENTION

The aim of the present invention is to provide such a cartridge construction, specifically designed for multiple-outlet faucet switching devices, which is improved with respect to the prior art.

Within the scope of the above mentioned aim, a main object of the present invention is to provide such a cartridge construction comprising a very small number of movable portions.

Another object of the present invention is to provide such a cartridge construction which is very reliable in operation and of long duration.

Yet another object of the present invention is to provide such a cartridge construction which can be easily used by the user.

According to one aspect of the present invention, the above mentioned aim and objects, as well as yet other objects, which will become more apparent hereinafter, are achieved by a cartridge construction according to Claim 1.

### BRIEF DESCRIPTION OF THE DRAWINGS

Further characteristics and advantages of the present invention will become more apparent hereinafter from the following detailed disclosure of a preferred, though not exclusive, embodiment of the invention, which is illustrated, by way of an indicative, but not limitative example, in the accompanying drawings, where:

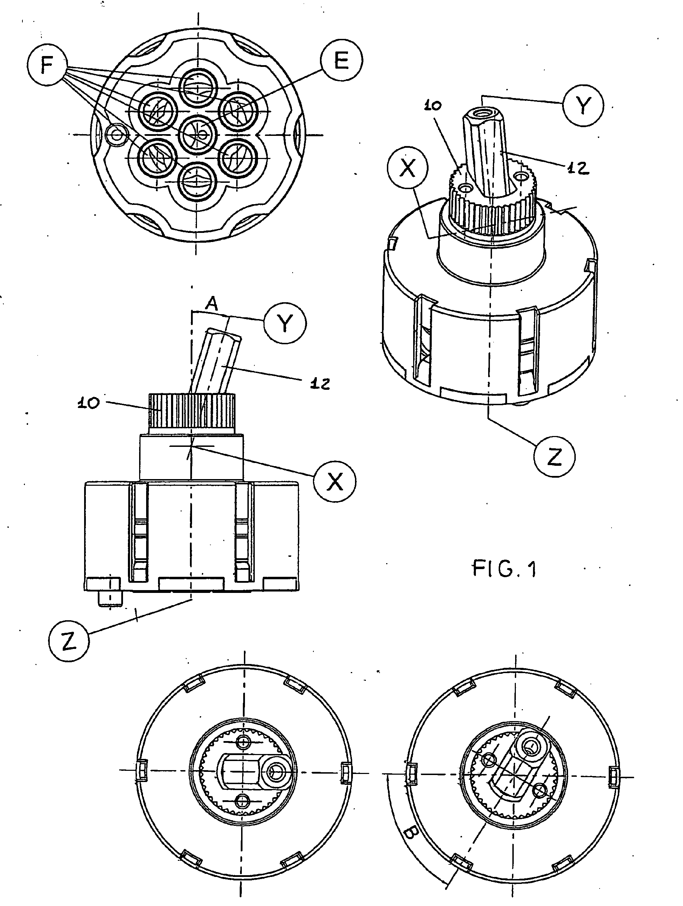

Figure 1 shows several views of a cartridge construction;

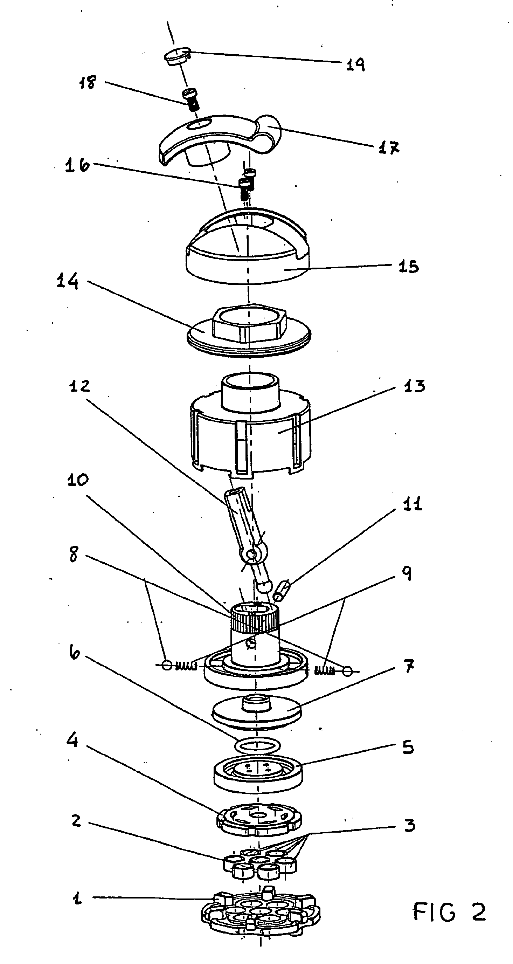

Figure 2 is an exploded view of the cartridge construction;

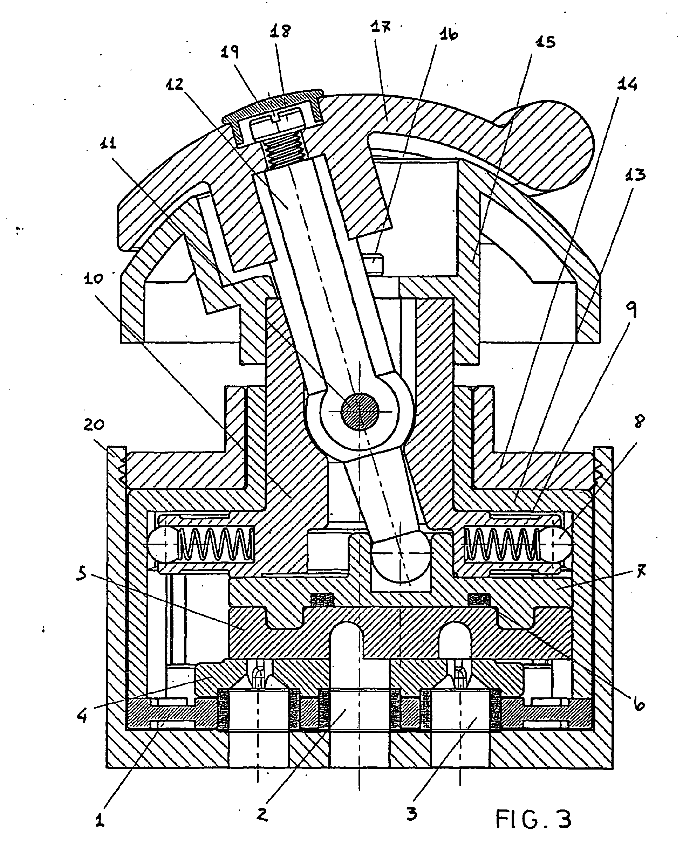

Figure 3 is a cross-sectional view of the cartridge construction, in an opening position thereof;

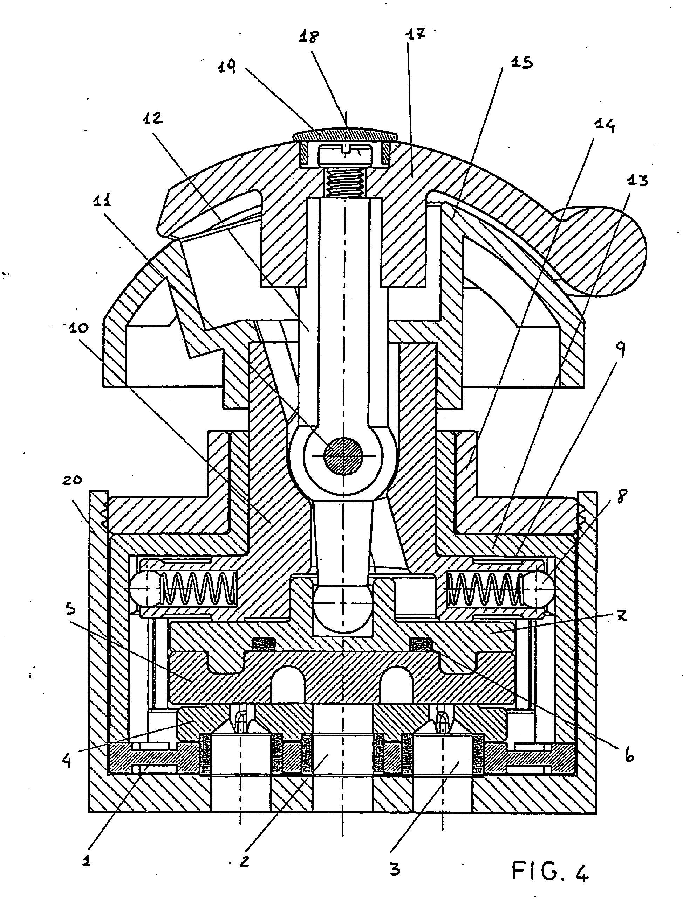

Figure 4 is a cross-sectional view of the cartridge construction, in a closing position thereof;

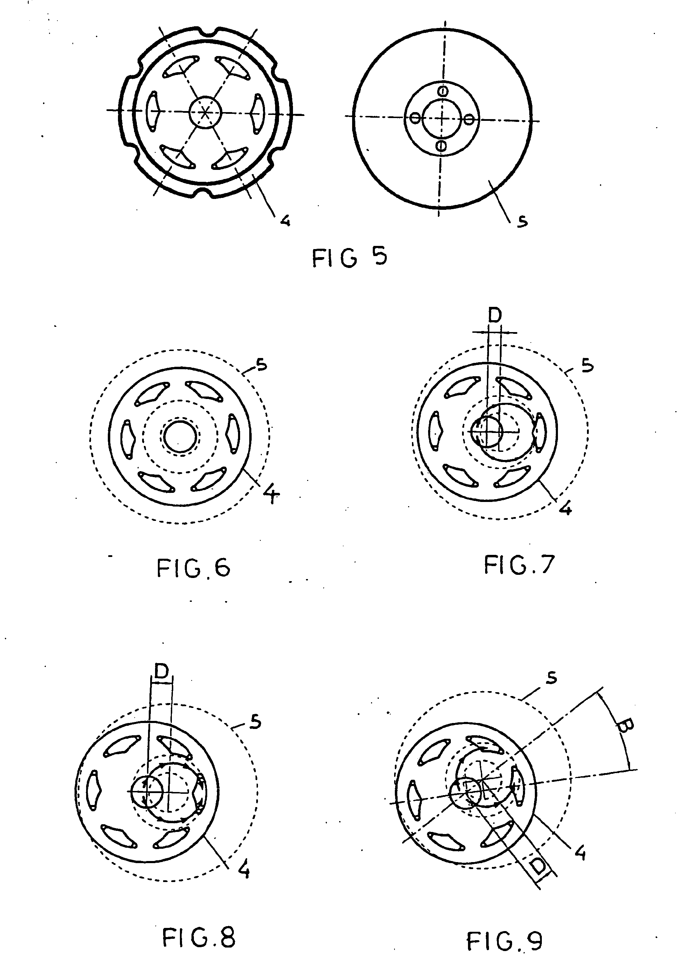

Figure 5 is a schematic view illustrating the contacting surfaces of the fixed and movable ceramic elements;
Figure 6 is a further schematic view illustrating the pair of movable and fixed ceramic elements in a closing position thereof;
Figure 7 is a further schematic view illustrating the pair of movable and fixed ceramic elements, in a partial opening position thereof;
Figure 8 illustrates the pair of movable and fixed ceramic elements in a full opening position thereof;
Figure 9 shows the pair of movable and fixed ceramic elements, in a full opening position thereof, with switching on two outlets;

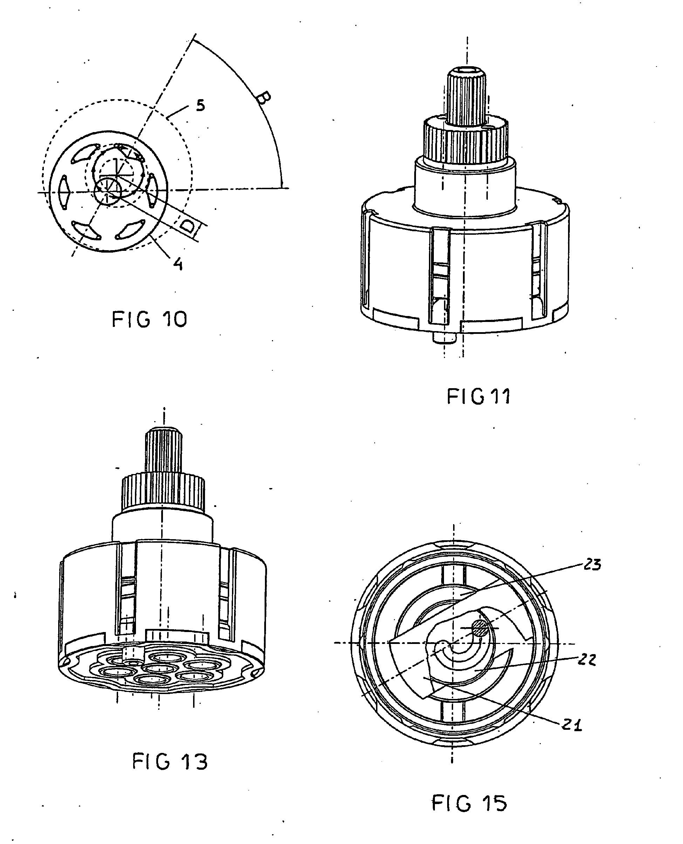

Figure 10 shows the pair of movable and fixed ceramic elements, in a full opening position, with a switching onto an outlet;
Figure 11 is a top view of the rotary cartridge with a concentrical manipulation or handling according to the invention;

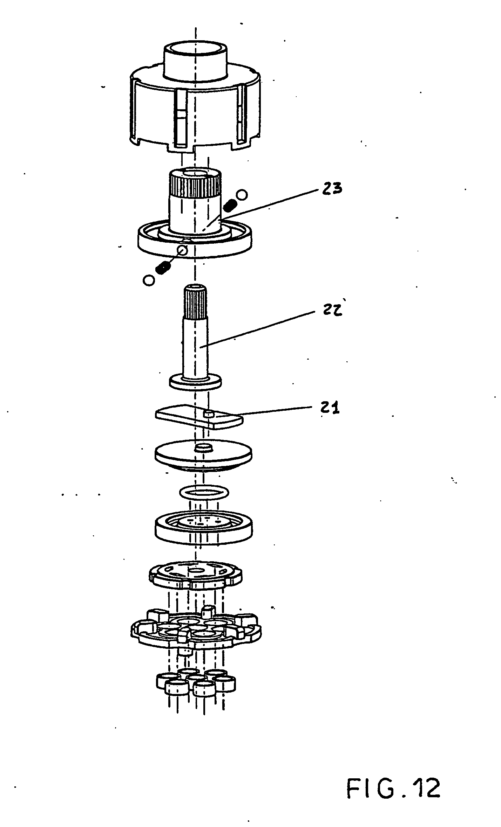

Figure 12 is an exploded view showing the rotary cartridge with a concentrical handling, as seen from the top;

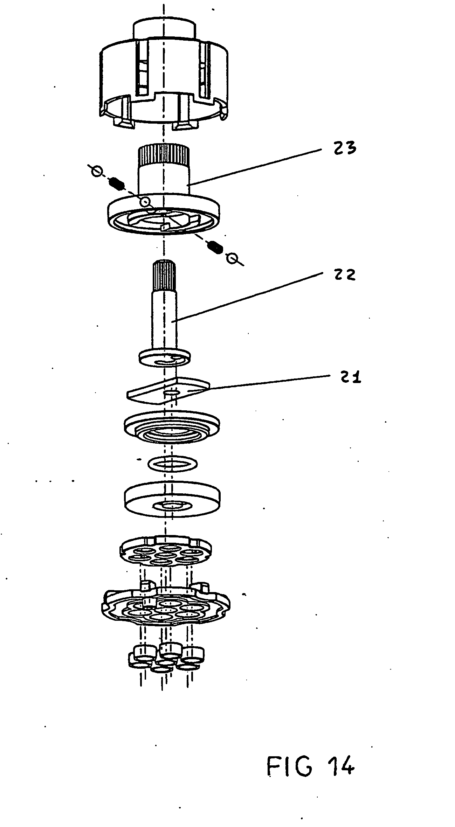

Figure 13 is a bottom view of the rotary cartridge with concentrical handling;
Figure 14 is an exploded view of the rotary cartridge, with concentrical handling, as seen from the bottom; and
Figure 15 is a displacement diagram of the opening and closing system for the cartridge with concentrical handling.

### DESCRIPTION OF THE PREFERRED EMBODIMENTS

With reference to the number references of the above mentioned figures, the cartridge construction, comprises a base 1 fixed inside a body 13 for providing a proper location on the body of a faucet or cock 20.

The cartridge is locked, in a per se known manner, by a clamping screw element 14.

The water inlet central hole E and the outer water outlet holes F are respectively engaged by gaskets or seals 2 and 3 which, in turn, contact a fixed ceramic disc 4.

Above said fixed ceramic disc 4 slides, without rotating, a movable ceramic element 5 which is fixed or clamped to a ceramic holder element 7.

Between the movable ceramic element 5 and ceramic holder element 7 a further gasket 6 is arranged.

Thus, between the two above mentioned parts, a useful water volume is formed for providing a good balancing of the forces inside the cartridge.

The body 13 holds therein a lever supporting element 10, which can rotate about the axis Z of the cartridge.

The lever supporting element 10 allows a lever 12 to be operated, said lever 12 having a geometrical axis indicated by Y and being designed for turning about the axis X of the pivot pin 11.

The lever supporting element 10 is provided with at least a mechanism for providing a snap type of displacement.

In the disclosed embodiment, are provided two springs 9 and two balls 8 to provide a precise feeling of the rotary position achieved by properly rotating a handle 15, which is coupled by set screws 16.

An opening and closing lever 17 is fixed to the lever 12, through a clamping screw 18, covered by a clamping screw casing 19.

The ceramic holder element 7 contacts the bottom surface of the lever supporting element 10, thereby providing a free contact between the two surfaces.

The lever 12, in its portion underlying the rotary axis X, is provided with a ball element thereby, by turning through an angle A about the axis X, the ball portion will provide a displacement D with respect to the main axis.

The ball shaped portion of the lever 12 is engaged in a guide of the ceramic holder element 7 which, in turn, is coupled to the movable ceramic element 5 thereby the rotation A will cause, also for the movable ceramic element, a displacement from the center D.

The opening and closing operations are carried out in the following manner.

More specifically, the movable ceramic element 5 has its fixed ceramic element 4 contacting surface provided with a toroidal hollow or cavity allowing a tangential movement of water.

As the axis of the movable ceramic element 5 coincides with that of the cartridge construction, said cavity will not communicate with the water inlet.

By turning the lever 12, the movable ceramic element 5 is displaced.

Thus, the mentioned cavity will open the water inlet, thereby water will be directed either to one or both preselected outlets.

According to the invention the opening and closing operations are performed by a rotary lever 22, coaxial with the cartridge.

In particular, the lever 22 has a bottom portion thereof including a spiral guide therein slides the location pin of the slidable insert element 21 which, in turn, is guided by the lever supporting element 23.

The rotary movement of the lever 22 will transmit to the sliding insert element 21 a translatory motion.

Since the insert element 21 is connected to the movable ceramic element, the mentioned translatory movement will be transmitted to the latter, thereby causing the cartridge to be opened and closed.

The water switching operation is performed as follows.

The ceramic holder element 7 and the ceramic movable element 5 perform, with respect to the lever supporting element 10, a translatory movement.

At an opening position, i.e. with the movable ceramic element displaced by D with respect to the center, the switching operation is obtained by turning the lever supporting element 10.

This rotary movement will provide a circular trajectory of radius D, therealong the fixed ceramic element and ceramic holder element are displaced.

In a closing position, by turning the lever supporting element 10, the movable ceramic element 5 does not perform any movement.

By turning the lever 12 through an angle B, the center of the movable ceramic element will be displaced by the distance D with respect to the axis Z.

By turning the lever supporting element 10, said distance D will not be changed.

The fixed ceramic element 5 describes a trajectory having a radius D with respect to the axis Z, but it does not turn about the axis thereof.

It has been found that the invention fully achieves the intended aim and objects.

In fact, the invention provides a cartridge construction for faucet switching devices including at least two outlets, in which are provided two ceramic disc elements, whereas the opening and closing water flow switching operations are obtained by a single movable ceramic disc.

In practicing the invention, the used materials, as well as the contingent size and shapes, can be any, depending on requirements and the status of the art.

## Claims

1. A cartridge construction for a faucet (20) switching device having at least two outlets, whereby said cartridge construction comprises at least a water inlet central hole (E) and a plurality of water outlet holes (F), a fixed ceramic disc (4) and a movable ceramic element (5), said movable ceramic element (5) being fixed to a holder element (7), **characterized in that** said movable ceramic element, in a preselected angular position, slides, without rotating, on said fixed ceramic disc (5), and that a coaxial rotary lever (22) for opening and closing said cartridge construction is arranged coaxially with said cartridge construction, said lever including, at a bottom portion thereof, a spiral guide wherein a pin element slides for locating a sliding insert (21) which, in turn, is guided by a lever (22) supporting element (23).

2. A cartridge construction, according to claim 1, **characterized in that** said cartridge construction comprises a base (1) fixed inside a body (13) and adapted to be located on said faucet (20), said cartridge construction being locked by a clamping screw element (14).

3. A cartridge construction, according to claim 1 or 2, **characterized in that** said water inlet central hole (E) and said outer water outlet holes (F) comprise sealing gaskets (2, 3) which, in turn, contact said fixed ceramic disc (4).

4. A cartridge construction, according to claim 1, **characterized in that** between said movable ceramic element (5) and said holder element (7) a further sealing gasket is arranged.

5. A cartridge construction, according to claim 1, **characterized in that** said ceramic holder element (7) contacts a bottom surface of said lever supporting element (10).

6. A cartridge construction, according to claim 1, **characterized in that** said movable ceramic element (5) has a surface thereof contacting said fixed ceramic element (4) provided with a toroidal cavity allowing a tangential movement of water.

7. A cartridge construction, according to claim 6, **characterized in that**, as the axis of the movable ceramic element (5) coincides with that of the cartridge, said cavity does not communicate with the water inlet (E).

8. A cartridge construction, according to one or more of the preceding claims, **characterized in that**, by turning said rotary lever (22), said movable ceramic element (5) is slidably displaced to cause said cavity to open said water inlet (z), thereby allowing water to pass either to one or two preselected water outlets (F).

9. A cartridge construction, according to claim 8, **characterized in that** said sliding insert (21) is coupled to said movable ceramic element (5) to transmit a sliding movement to said movable ceramic element (5) thereby opening and closing said cartridge.

10. A cartridge construction, according to one or more of the preceding claims, **characterized in that** said holder element (7) and said movable ceramic element (5) describe, with respect to said lever supporting element, a translatory movement; at an opening position, i.e. with the movable ceramic element (5) displaced from the center, the switching being obtained by turning said lever supporting element, said rotary movement providing a circular trajectory therealong are displaced said fixed ceramic element (4) and said holder element (7), whereas, at a closing position, by turning the lever supporting element, the movable ceramic element (5) does not perform movements.

11. A cartridge construction, according to one or more of the preceding claims, **characterized in that**, by turning said rotary lever (22) through a given angle, the center of said movable ceramic element (5) is displaced by a given distance with respect to said axis whereas, by turning the lever supporting element said distance is not changed, the fixed ceramic element (4) performing a trajectory with respect to the axis, but not rotating about its axis.

## Patentansprüche

1. Kartusche für Umschaltbatterie (20) mit mindestens zwei Auslässen, wobei die Kartusche mindestens ein mittleres Wässereinlassloch (E) und mehrere Wasserauslasslöcher (F), eine starre Keramikscheibe (4) und ein bewegliches Keramikelement (5) umfasst, wobei das Keramikelement (5) an einem Halteelement (7) befestigt ist, **dadurch gekennzeichnet, dass** das bewegliche Keramikelement in einer vorgewählten Winkelposition ohne zu drehen auf der starren Keramikscheibe gleitet, und dass ein koaxialer Drehhebel (22) zum Öffnen und Schließen der kartusche koaxial mit der Kartusche angeordnet ist, wobei der Hebel an einem Bodenabschnitt davon eine Spiralführung enthält, wo ein Stiftelement zum Positionieren eines Gleiteinsatzstücks (21) gleitet, das wiederum durch ein Stützelement (23) des Hebels (22) geführt ist.

2. Kartusche nach Anspruch 1, **dadurch gekennzeichnet, dass** die Kartusche eine Basis (1) umfasst, die innerhalb eines Körpers (13) befestigt und dazu geeignet ist, auf der Batterie (20) angeordnet zu sein, wobei die Kartusche durch ein Klemmschraubenelement (14) gesperrt ist.

3. Kartusche nach einem der Ansprüche 1 oder 2, **dadurch gekennzeichnet, dass** das mittlere Wassereinlassloch (E) und die äußeren Wasserauslasslöcher (F) Dichtungen (2, 3) umfassen, die wiederum die starre Keramikscheibe (4) berühren.

4. Kartusche nach Anspruch 1, **dadurch gekennzeichnet, dass** zwischen dem beweglichen Keramikelement (5) und dem Halteelement (7) eine weitere Dichtung angeordnet ist.

5. Kartusche nach Anspruch 1, **dadurch gekennzeichnet, dass** das Keramikhalteelement (7) eine Bodenfläche des Hebelstützelements (10) berührt.

6. Kartusche nach Anspruch 1, **dadurch gekennzeichnet, dass** das bewegliche Keramikelement (5) eine Oberfläche aufweist, die das starre Keramikelement (4) berührt und mit einem torusförmigen Hohlraum versehen ist, der eine Tangentialbewegung des Wassers ermöglicht.

7. Kartusche nach Anspruch 6, **dadurch gekennzeichnet, dass** die Achse des beweglichen Keramikelements (5) mit der der Kartusche übereinstimmt, wobei der Hohlraum nicht mit dem Wassereinlass (E) in Verbindung steht.

8. Kartusche nach einem oder mehreren der vorhergehenden Ansprüche, **dadurch gekennzeichnet, dass** das bewegliche Keramikelement (5) durch Drehen des Drehhebels (22) gleitbar verschoben wird, um zu bewirken, dass der Hohlraum den Wassereinlass (Z) öffnet, wodurch ermöglicht ist, dass Wasser entweder zu einem oder zu zwei vorgewählten Wasserauslässen (F) läuft.

9. Kartusche nach Anspruch 8, **dadurch gekennzeichnet, dass** das Gleiteinsatzstück (21) zum Übertragen einer Gleitbewegung auf das bewegliche Keramikelement (5) an das bewegliche Keramikelement (5) gekuppelt ist, wodurch die Kartusche geöffnet und geschlossen wird.

10. Kartusche nach einem oder mehreren der vorhergehenden Ansprüche, **dadurch gekennzeichnet, dass** das Halteelement (7) und das bewegliche Keramikelement (5) bezüglich des Hebelstützelements eine Translationsbewegung beschreiben; wobei an einer Öffnungsposition, d.h. wenn das bewegliche Keramikelement (5) von der Mitte verschoben ist, das Umschalten durch Drehen des Hebelstützelements erzielt ist, wobei die Drehbewegung eine Kreisbahn vorsieht, an der entlang das starre Keramikelement (4) und das Halteelement (7) verschoben sind, während an einer Schließposition das bewegliche Keramikelement (5) durch Drehen des Hebelstützelements keine Bewegungen ausführt.

11. Kartusche nach einem oder mehreren der vorhergehenden Ansprüche, **dadurch gekennzeichnet, dass** durch Drehen des Drehhebels (22) über einen vorgegebenen Winkel die Mitte des beweglichen Keramikelements (5) um einen vorgegebenen Abstand bezüglich der Achse verschoben ist, während durch Drehen des Hebelstützelements der Abstand nicht geändert ist, wobei das Keramikelement (4) eine Laufbahn bezüglich der Achse ausführt, jedoch nicht um diese Achse dreht.

## Revendications

1. Configuration de cartouche, pour un dispositif de commutation, de robinet (20) ayant au moins deux sorties, moyennant quoi ladite configuration de cartouche comprend au moins un orifice central d'entrée d'eau (E) et une pluralité d'orifices de sortie d'eau (F), un obturateur à plaque céramique fixe (4) et un élément céramique mobile (5), ledit élément céramique mobile (5) étant fixé à un élément de support (7), **caractérisée en ce que** ledit élément céramique mobile, dans une position angulaire présélectionnée, coulisse, sans tourner, sur ledit obturateur à plaque céramique fixe (5), et **en ce qu'**un levier rotatif coaxial (22) permettant d'ouvrir et de fermer ladite configuration de cartouche est agencé coaxialement à ladite configuration de cartouche, ledit levier incluant, au niveau de sa partie inférieure, un guide en spirale dans lequel coulisse un élément de goupille permettant de positionner un insert coulissant (21) qui, à son tour, est guidé par un élément de maintien (23) du levier (22).

2. Configuration de cartouche, selon la revendication 1, **caractérisée en ce que** ladite configuration de cartouche comprend une base (1) fixée à l'intérieur d'un corps (13), et est conçue pour être placée sur ledit robinet (20), ladite configuration de cartouche étant verrouillée par un élément de vis de serrage (14).

3. Configuration de cartouche, selon la revendication 1 ou 2, **caractérisée en ce que** ledit orifice central d'entrée d'eau (E) et lesdits orifices de sortie d'eau externes (F) comprennent des garnitures d'étanchéité (2, 3) qui, à leur tour, entrent en contact avec ledit obturateur à plaque céramique fixe (4).

4. Configuration de cartouche selon la revendication 1, **caractérisée en ce que**, entre ledit élément céramique mobile (5) et ledit élément de support (7), est agencée une autre garniture d'étanchéité.

5. Configuration de cartouche selon la revendication 1, **caractérisée en ce que** ledit élément de support céramique (7) entre en contact avec une surface inférieure dudit élément de maintien du levier (10).

6. Configuration de cartouche selon la revendication 1, **caractérisée en ce que** ledit élément céramique mobile (5) a une surface entrant en contact avec ledit élément céramique fixe (4) muni d'une cavité toroïdale permettant un mouvement tangentiel de l'eau.

7. Configuration de cartouche selon la revendication 6, **caractérisée en ce que**, quand l'axe de l'élément céramique mobile (5) coïncide avec celui de la cartouche, ladite cavité ne communique pas avec l'entrée d'eau (E).

8. Configuration de cartouche selon au moins l'une quelconque des revendications précédentes, **caractérisée en ce que**, en tournant ledit levier rotatif (22), ledit élément céramique mobile (5) est déplacé par coulissement pour pousser ladite cavité à ouvrir ladite entrée d'eau (Z), ce qui permet à l'eau de passer dans une ou deux sorties d'eau présélectionnées (F).

9. Configuration de cartouche selon la revendication 8, **caractérisée en ce que** ledit insert coulissant (21) est couplé audit élément céramique mobile (5) pour transmettre un mouvement coulissant audit élément céramique mobile (5), ce qui ouvre et ferme ladite cartouche.

10. Configuration de cartouche selon au moins l'une des revendications précédentes, **caractérisée en ce que** ledit élément de support (7) et ledit élément céramique mobile (5) décrivent, par rapport audit élément de maintien du levier, un mouvement de translation ; dans une position d'ouverture, c'est-à-dire quand l'élément céramique mobile (5) est déplacé par rapport au centre, la commutation étant obtenue en tournant ledit élément de maintien du levier, ledit mouvement rotatif permettant d'obtenir une trajectoire circulaire le long de celui-ci, on déplace ledit élément céramique fixe (4) et ledit élément de support (7), tandis que, dans une position de fermeture, en tournant l'élément de maintien du levier, l'élément céramique mobile (5) n'effectue aucun mouvement.

11. Configuration de cartouche selon au moins l'une des revendications précédentes, **caractérisée en ce que**, en tournant ledit levier rotatif (22) selon un angle donné, le centre dudit élément céramique mobile (5) est déplacé sur une distance donnée par rapport audit axe, tandis que, en tournant l'élément de maintien du levier, ladite distance ne change pas, l'élément céramique fixe (4) réalisant une trajectoire par rapport à l'axe, mais ne tournant pas autour de son axe.
